# EUROPEAN PATENT APPLICATION

(11) **EP 4 623 768 A1**
(43) Date of publication of application: **01.10.2025**
(21) Application number: 25165945.4
(22) Date of filing: 25.03.2025
(51) Int. Cl.: A47J 31/42, A47J 31/44, A47J 31/36, A47J 31/06

(54) **COFFEE MACHINE WITH INTEGRATED COFFEE GRINDER**

(30) Priority: 26.03.2024 IT 202400006721
(71) Applicant: SMEG S.p.A., 42016 Guastalla (RE) (IT)
(72) Inventor: BERTABONI, Giulio, 37060 BONFERRARO DI SORGÀ (VR) (IT); RUSSO, Andrea, 37060 BONFERRARO DI SORGÀ (VR) (IT)
(74) Representative: Studio Torta S.p.A.

(57) **Abstract**

A coffee machine is provided with:
• a main body (2) extending along a longitudinal axis (A) between a front portion (3) and a rear portion (4); the front portion (3) being configured to be arranged, in use, proximal to the user operating the machine (1);
• a coffee grinding device (7) comprising a grinding unit (10) housed in the main body (2) and a ground coffee dispenser (11);
• a coffee brewing device (8) comprising a pressurised hot water generation unit (13) housed in the main body (2) and a hot water dispenser (14);
the ground coffee dispenser (11) and the hot water dispenser (14) being substantially aligned along an alignment direction (D) parallel to the longitudinal axis (A).

## Description

### Cross-reference to related applications

This patent application claims priority from Italian patent application no. 102024000006721 filed on March 26, 2024, the entire disclosure of which is incorporated herein by reference.

### Technical field

The invention relates to a coffee machine with integrated coffee grinder.

The technical field of reference of the invention relates, in particular, to coffee machines for domestic use.

### Background

It is known that preparing coffee using freshly ground coffee powder is the mode preferred by coffee lovers.

The freshly ground coffee bean is characterized by a very intense aroma compared to that of ground and packaged coffee.

In addition, fresh grinding allows for a more creamy and full-bodied coffee, thus enhancing its taste. For these reasons, bars and restaurants prefer to have a professional coffee grinder to grind mixtures of coffee beans at the moment.

Market research also shows that the demand for coffee in domestic environments is growing and that users are increasingly aware of the characteristics and abilities of the products used.

However, the solutions typically adopted in the professional field (bars and restaurants) are not easily applicable at home. One of the most important discriminating factors, in fact, is the size of the machines.

The presence of a coffee grinder and a coffee machine often entails encumbrances that are not compatible with the narrow spaces normally available in domestic kitchens.

Therefore, machines were developed for the domestic market, which integrate coffee grinder and coffee machine in one single device.

However, even for these machines, the overall dimensions remain non-negligible.

Therefore, an object of the invention is to provide a coffee machine with integrated coffee grinder, which is not affected by the aforementioned drawbacks of the prior art; in particular, an object of the invention is to provide a coffee machine, which overcomes the aforesaid size-related drawbacks in a simple and economic fashion, both from the functional point of view and from the constructive point of view.

### Description of the invention

In accordance with these objects, the invention relates to a coffee machine comprising:
- a main body extending along a longitudinal axis between a front portion and a rear portion; the front portion being configured to be arranged proximal to the user operating the machine;
- a coffee grinding device comprising a grinding unit housed in the main body and a ground coffee dispenser;
- a coffee brewing device comprising a pressurised hot water generation unit housed in the main body and a hot water dispenser;
the ground coffee dispenser and the hot water dispenser being substantially aligned along an alignment direction parallel to the longitudinal axis.

Thanks to the configuration described above, the coffee machine has small dimensions, especially in width, as the ground coffee dispenser and the hot water dispenser are aligned along the depth of the machine.

The compactness of the solution, in particular in the width dimension, facilitates positioning and installation in a domestic environment. This is especially true for kitchen countertops, where common coffee machines with integrated coffee grinder are larger and difficult to place.

### Brief description of the drawings

Further features and advantages of the invention will be best understood upon perusal of the following description of a non-limiting embodiment thereof, with reference to the accompanying drawings, wherein:
- figure 1 is a schematic perspective view, with parts removed for greater clarity, of a coffee machine according to the invention;
- figure 2 is a schematic perspective view, with parts removed for greater clarity, of some inner details of the coffee machine of figure 1.

### Description of an embodiment of the invention

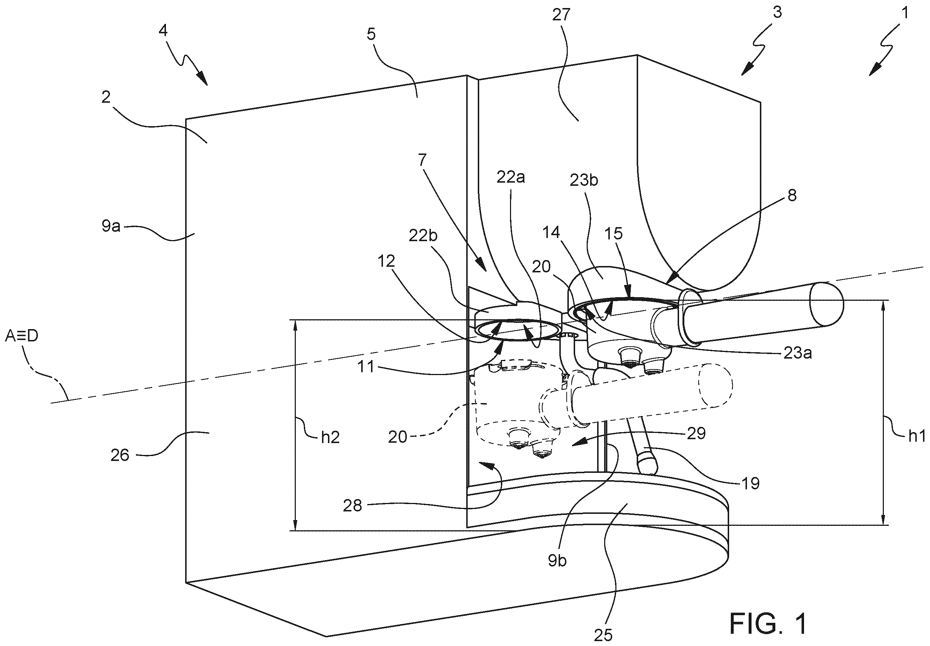

In figure 1, reference number 1 indicates a coffee machine.

The coffee machine 1 comprises a main body 2, which extends along a longitudinal axis A.

The main body 2, in use, is arranged so as to rest on a horizontal plane.

In particular, the main body 2 extends between a front portion 3 (which defines the front part of the machine 1) and a rear portion 4 (which defines the back of the machine 1). The front portion 3 is the portion that, in use, is arranged proximal to the user operating the machine. In other words, the user operating the coffee machine faces the front portion 3 of the main body 2.

In other words, looking frontally at the main body 2, the longitudinal axis A extends between the front portion 3 and the rear portion 4, substantially defining a depth axis. The main body 2 is further provided with two lateral sides 9a, 9b. The distance measured along an axis orthogonal to the longitudinal axis A between the lateral sides 9a, 9b substantially defines the width of the main body 2.

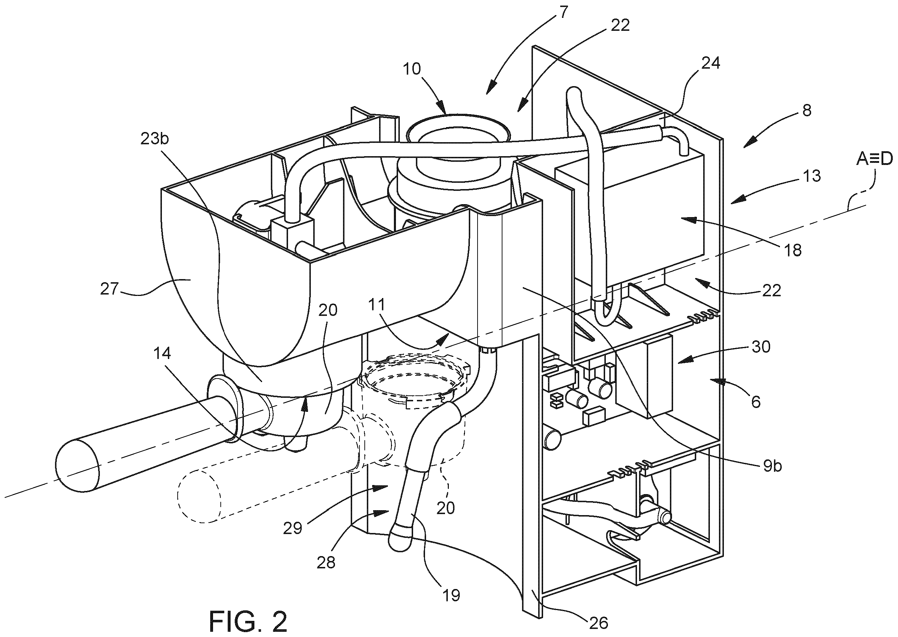

The main body 2 comprises an outer shell 5 (figure 1), which is preferably consists of several parts assembled together, and an inner frame 6 (at least partly visible in figure 2), which supports the outer shell 5 (figure 1) and part of the components of the machine 1.

The coffee machine 1 further comprises a coffee grinder device 7 and a coffee brewing device 8 (partially visible in figures 1 and 2).

The coffee grinding device 7 comprises a grinding unit 10 (partially visible in figure 2) housed in the main body 2 and supported by the frame 6 and a ground coffee dispenser 11 (partially visible in figure 1). The ground coffee dispenser 11 at least partly engages an opening 12 of the outer shell 5 of the main body 2, as discussed more in detail below.

The grinding unit 10 is configured to grind coffee beans fed by the user to the grinding unit 10 through an opening made in the outer shell 5 and not visible in the accompanying figures.

According to a variant which is not shown herein, the coffee machine 1 can be provided with a collection tank connected to the grinding unit 10 and configured to collect the beans to be ground. The collection tank can be coupled to the outer shell 5 or can be housed in the main body 2. The coffee ground by the grinding unit 10 is dispensed through the ground coffee dispenser 11.

The coffee brewing device 8 comprises a pressurised hot water generation unit 13 (partially visible in figure 2) housed in the main body 2 and supported by the frame 6 and a hot water dispenser 14. The hot water dispenser 14 at least partly engages an opening 15 of the outer shell 5 of the main body 2, as discussed more in detail below.

In particular, the pressurised hot water generation unit 13 comprises a water tank (not visible in figure 1 and preferably located in the rear portion 4 of the main body 2), a boiler 18 configured to heat water and at least one pump (not visible in the accompanying figures) configured to send hot water from the boiler 18 to the hot water dispenser 14 with a predetermined pressure.

Preferably, the coffee machine 1 is also provided with a steam dispensing wand 19, which can directly or indirectly be connected to the boiler 18 to dispense the steam generated while heating the water.

Figure 1 also shows a filter holder 20 provided with a filter (not completely visible), which is filled, in use, with the ground coffee. The filter holder 20 is provided with a knob that facilitates the movement of the filter holder 20 and the coupling thereof to the hot water dispenser 14.

The ground coffee dispenser 11 is preferably shaped so as to also define a housing 22a for the possible insertion and/or coupling of the filter holder 20. According to a non-limiting embodiment, the ground coffee dispenser 11 comprises a peripheral wall 22b, which substantially defines the housing 22a.

The hot water dispenser 14 is preferably shaped so as to also define a housing 23a for the possible insertion and/or coupling of the filter holder 20. According to a non-limiting embodiment, the hot water dispenser 14 comprises a peripheral wall 23b, which substantially defines the housing 23a and is preferably provided with a coupling system configured to couple the peripheral wall 23b to the filter holder 20. In the non-limiting embodiment described and shown herein, the coupling system is obtained along the inner face of the peripheral wall 23b (not visible in the accompanying figures).

The ground coffee dispenser 11 and the hot water dispenser 14 are substantially aligned along an alignment direction D substantially parallel to the longitudinal axis A.

Aligned means, here and in the following, that at least a portion of the hot water dispenser 14 and at least a portion of the ground coffee dispenser 11 are aligned along an alignment direction D substantially parallel to the longitudinal axis A.

In other words, the hot water dispenser 14 and the ground coffee dispenser 11 do not necessarily have to be centred on the alignment direction D.

Preferably, the hot water dispenser 14 is arranged in front of the ground coffee dispenser 11. In other words, the hot water dispenser 14 for the preparation of coffee is preferably arranged in a position proximal to the front portion 3 of the main body 2 of the machine 1 (and, therefore, the hot water dispenser 14 is also proximal to the user of the machine 1).

Preferably, the hot water dispenser 14 and the ground coffee dispenser 11 are aligned along the longitudinal axis A of the main body 2.

In other words, the alignment direction D coincides with the longitudinal axis A.

The longitudinal axis A preferably is also the axis of symmetry of the main body 2. In this way, the coffee machine 1 has a structure in which the hot water dispenser 14 and the ground coffee dispenser 11 are aligned on the central axis A of the main body 2. This makes it easier for users to use the machine, regardless of whether they are left-handed or right-handed.

In addition, the alignment of the hot water dispenser 14 and the ground coffee dispenser 11 on the central axis A allows the machine to be used even in the presence of small spaces in the surrounding area. For example, the machine can be positioned on the side of a particularly bulky element, which can limit the operations of movement of the filter holder by the user, as the machine can be used on the other side without limitations. In other words, the manoeuvring space required by the filter holder filling and coupling operations is also reduced, thanks to the structure of the machine according to the invention.

Preferably, the hot water dispenser 14 and the ground coffee dispenser 11 are arranged substantially at the same height with respect to a horizontal reference plane.

Figure 1 shows the height h1 of the hot water dispenser 14, understood as the distance measured along a vertical direction with respect to the lying plane of the main body 2. Preferably, the height h1 is measured starting from the lower edge of the peripheral wall 23a of the hot water dispenser 14.

Figure 1 also shows the height h2 of the ground coffee dispenser 11, understood as the distance measured along a vertical direction with respect to the same lying plane of the main body 2. Preferably, the height h2 is measured starting from the lower edge of the peripheral wall 22a of the ground coffee dispenser 11.

With reference to figure 2, preferably, the boiler 18 is arranged inside the main body 18 substantially side by side with the grinding unit 10; wherein side by side means that at least a portion of the boiler 18 is arranged aligned with at least a portion of the grinding unit 10 along a direction transverse to the longitudinal axis A, preferably orthogonal to the axis A.

In particular, the frame 6 is configured so as to define a first housing seat 21, which is configured to house the boiler 18, and a second housing seat 22, which is configured to house the grinding unit 10.

The first housing seat 21 and the second housing seat 22 are preferably separated by a partition wall 24.

The partition wall 24 has the function of preventing the passage of moisture between the areas connected to the housing seat 21 and the housing seat 22. By so doing, any moisture present in the coffee brewing area is prevented from affecting the coffee beans that are yet to be ground.

Preferably, the water tank is arranged at the back of the grinding unit 10 along an axial direction (i.e. parallel to the longitudinal axis A).

With particular reference to figure 1, the main body 2 comprises a support base 25, an upright 26, which protrudes orthogonally from a rear portion of the support base 25, and a head 27, which protrudes orthogonally towards the front portion 3 from the end of the upright 26 opposite the support base 25.

Basically, the head 27 is at least partly arranged above the support base 25.

The head 27 is provided with the hot water dispenser 14.

The upright 26 is provided with a recess 28, which has an inlet 29 defined by an opening extending between the head 27 and the support base 25. The ground coffee dispenser 11 is at least partly housed in the recess 28.

The machine 1 further comprises an electronic control board 30 (partially visible in figure 2) for controlling the activation and the adjustment of the coffee grinder device 7 and of the coffee brewing device 8. The electronic control board 30 is connected to a user interface (not visible in the accompanying figures).

In use, the user activates the machine 1 by means of a dedicated control of the interface.

The activation of the machine 1 determines the heating of a given quantity of water taken from the tank.

The user can then load the coffee beans into the grinding unit 10, position the filter holder 20 at the outlet of the ground coffee dispenser 11 (or coupling filter holder 20 to the ground coffee dispenser 11 if the coupling is available) the and activate the grinding by means of the interface in order to collect the coffee powder in the filter of the filter holder 20. The user then removes the filter holder 20 from the grinding position, presses the coffee powder into the filter with a dedicated press, inserts the filter holder 20 in the coffee brewing position by coupling the filter holder 20 to the hot water dispenser 14 and activates the hot water dispensing by means of the interface.

Advantageously, the machine 1 according to the invention is particularly compact and has a structure that also allows for a reduction of the user's manoeuvring space.

The compactness of the machine 1 according to the invention, in addition to facilitating domestic positioning, also improves the efficiency of the production operations, thanks to the smaller space required for the handling and assembling the product itself.

The compactness of the machine 1 according to the invention also makes it possible to improve the efficiency of logistics, both in the assembly line and in the warehouses for the storage and handling of products.

Finally, it is evident that the machine disclosed and shown herein can be subjected to changes and variations, without going beyond the scope of protection of the invention defined in the appended claims.

## Claims

1. Coffee machine comprising:
• a main body (2) extending along a longitudinal axis (A) between a front portion (3) and a rear portion (4); the front portion (3) being configured to be arranged, in use, proximal to the user operating the machine (1);
• a coffee grinding device (7) comprising a grinding unit (10) housed in the main body (2) and a ground coffee dispenser (11);
• a coffee brewing device (8) comprising a pressurised hot water generation unit (13) housed in the main body (2) and a hot water dispenser (14);
the ground coffee dispenser (11) and the hot water dispenser (14) being substantially aligned along an alignment direction (D) parallel to the longitudinal axis (A).

2. Machine according to claim 1, wherein the hot water dispenser (14) is arranged at the front of the ground coffee dispenser (11).

3. Machine according to claim 1 or 2, wherein the main body (2) is elongated along the longitudinal axis (A).

4. Machine according to any of the foregoing claims, wherein the alignment direction (D) coincides with the longitudinal axis (A).

5. Machine according to any of the foregoing claims, wherein the longitudinal axis (A) is arranged centrally with respect to the main body (2); preferably, the longitudinal axis (A) is an axis of symmetry of the main body (2).

6. Machine according to any of the foregoing claims, wherein the pressurised hot water generation unit (13) comprises a water tank, a boiler (18) configured to heat the water, and at least one pump configured to send the hot water from the boiler (18) to the hot water dispenser (14) with a predetermined pressure; the boiler (18) being arranged substantially side-by-side with the grinding unit (10); wherein side-by-side means arranged aligned with the grinding unit (10) along a direction transverse to the longitudinal axis (A), preferably orthogonal to the longitudinal axis (A).

7. Machine according to claim 6, wherein the water tank is arranged at the rear of the grinding unit (10) along an axial direction.

8. Machine according to claim 6 or 7, wherein the main body (2) comprises an outer shell (5) and an inner frame (6); the inner frame (6) being configured to define a first housing seat (21) configured to house the boiler (18), and a second housing seat (22) configured to house the grinding unit (10); the first housing seat (21) and the second housing seat (22) being separated by a partition wall (24).

9. Machine according to any of the foregoing claims, wherein the main body (2) comprises a support base (25), an upright (26), which protrudes orthogonally from a rear portion of the support base (25), and a head (27), which protrudes orthogonally towards the front portion (3) from the end of the upright (26) opposite the support base (25); the head (27) being provided with the hot water dispenser (14).

10. Machine according to claim 9, wherein the upright (26) is provided with a recess (28), which has an inlet (29) defined by an opening extending between the head (27) and the support base (25); the ground coffee dispenser (11) being housed in the recess (28).

11. Machine according to any of the foregoing claims, wherein the hot water dispenser (14) and the ground coffee dispenser (11) are arranged substantially at the same height with respect to a horizontal reference plane.

12. Machine according to claim 11, wherein the ground coffee dispenser (11) is shaped so as to define a first housing (22a) for the possible insertion and/or coupling of a filter holder (20); the ground coffee dispenser (11) comprising a first peripheral wall (22b), which substantially defines the first housing (22a).

13. Machine according to claim 11 or 12, wherein the hot water dispenser (14) is shaped so as to define a second housing (23a) for the possible insertion and/or coupling of a filter holder (20); the hot water dispenser (14) comprising a second peripheral wall (23b), which substantially defines the second housing (23a) and is preferably provided with a coupling system configured to couple the second peripheral wall (23b) to the filter holder (20).
